Europäisches Patentamt

European Patent Office

Office européen des brevets

(19)

(11) Publication number: **0 227 482 B1**

# EUROPEAN PATENT SPECIFICATION

(12)

(45) Date of publication of patent specification: 24.07.91

(51) Int. Cl.⁵: **B01J 35/04**, B01J 35/10, B01J 21/14

(21) Application number: 86310130.9

(22) Date of filing: 24.12.86

(54) Cordierite honeycomb structural body and method of producing the same.

(30) Priority: 27.12.85 JP 293691/85
27.12.85 JP 293692/85
05.08.86 JP 182824/86
05.08.86 JP 183904/86

(43) Date of publication of application:
01.07.87 Bulletin 87/27

(45) Publication of the grant of the patent:
24.07.91 Bulletin 91/30

(84) Designated Contracting States:
BE DE FR GB SE

(56) References cited:
EP-A- 0 202 107
FR-A- 2 306 956
US-A- 4 295 892
US-A- 4 421 699

(73) Proprietor: NGK INSULATORS, LTD.
2-56, Suda-cho, Mizuho-ku
Nagoya City Aichi Pref.(JP)

(72) Inventor: Hamanaka, Toshiyuki
429-50 Minamiwakamatsu-Cho
Suzuka City, Mie Pref.(JP)
Inventor: Watanabe, Keiichiro
4E, Corp. Nakanom 22-31 Sakae 1-Chome,
Naka-Ku
Nagoya City, Aichi Pref.(JP)
Inventor: Hamaguchi, Kunikazu
15 Takeda-Cho 2-Chome, Mizuho-ku
Nagoya City, Aichi Pref.(JP)
Inventor: Asami, Seiichi
1-110 Aza-Kamitokosafu Motojyuku-Cho
Okazaki City, Aichi Pref.(JP)

(74) Representative: Paget, Hugh Charles Edward
et al
MEWBURN ELLIS & CO. 2/3 Cursitor Street
London EC4A 1BQ(GB)

## Description

The present invention relates to a cordierite honeycomb structural body, particularly to a highly airtight cordierite honeycomb structural body for rotary accumulative type or heat transfer type heat exchanger, which is excellent in thermal shock resistance, airtight property and heat resistance, and a method of producing the same.

Lately, the desire for materials of excellent heat resistance and thermal shock resistance has increased along with improvement of industrial technology. The thermal shock resistance of ceramics is influenced not only by the coefficient of thermal expansion, heat transfer coefficient, strength, elastic modulus, Poisson's ratio and so on in a material, but also by the size, shape and heating and cooling conditions in an article.

It is known that among these factors influencing the thermal shock resistance, particularly, the contribution of the coefficient of thermal expansion is large; above all when heat flow rate is large, the thermal shock resistance is largely influenced only by the coefficient of thermal expansion. Therefore, there is a strong demand for the development of low thermal expansion materials of excellent thermal shock resistance.

Heretofore, cordierite ceramics has been known as a relatively low thermal expansion material. However, the densification of cordierite ceramics by sintering is difficult in general. Especially, for producing low thermal expansion cordierite ceramics of the coefficient of thermal expansion of $2.0 \times 10^{-6}/°C$ or less in a temperature range of from room temperature to $800°C$, batch composition of raw materials have to be used wherein an amount of impurities such as alkali, (calcium, potassium, sodium) and the like which function as fluxes in firing the batch composition is limited to a very minor amount, so that cordierite honeycomb structural bodies obtained by firing the batch composition have very few amount of glass phases and hence are very porous and not dense.

Accordingly, when such a cordierite ceramics is, for example, formed into a honeycomb structure to apply to a rotary accumulative type heat exchanger, fluid leakage is generated due to high porosity of open pores between the heating fluid and the heat recovery fluid because of pores, particularly communicated pores, on the surface of the partition wall defining the penetration holes of the honeycomb structural body, with the result that the heat exchanging efficiency and all efficiency of heat exchanger-using system decrease, which is a serious defect.

Thus, there has been a demand for a low thermal expansion and highly airtight cordierite honeycomb structural body having an improved thermal shock resistance.

Heretofore, low thermal expansion of cordierite ceramics has been publicly known. For instance, US-A-3,885,977 specification discloses an oriented cordierite ceramics of coefficient of thermal expansion of less than $11 \times 10^{-7}(1/°C)$ in at least one direction in a temperature range of 25-1,000°C, and describes a planar orientation given to platelets during processing of stacked clay, which can be platelet clay as a cause of such orientation. However, the cordierite ceramics uses coarse talc of particle diameter of 10-20 μm and clay of wide particle diameter of 0.1-10 μm, and also there is no disclosure about porosity.

Further, US-A-3,950,175 specification discloses that a porous cordierite ceramics having open pores of a pore diameter of more than 10 μm can be obtained in an amount of at least 20% by substituting silica or silica alumina source material such as pyrophyllite, kyanite, quartz or fused silica for a partial or whole amount of talc or clay in raw materials. However, control of pore size to lower levels is not described at all.

Furthermore, US-A-4,280,845 discloses a positive correlation between the average particle diameter of talc particles and the average pore diameter of pores in cordierite ceramics. However, in order to restrict the coefficient of thermal expansion to not more than $1.0 \times 10^{-6}/°C$, the talc particles should be made coarse as the average particle diameter of 10-50 μm. Therefore, this disclosure does not lead to the combination of low thermal expansion and high airtightness in a cordierite ceramic.

Finally, US-A-4,489,774 discloses a rotary accumulative type heat exchanger consisting of highly airtight cordierite ceramics, wherein a filling material adhesively seals open pores on the surface of the partition wall defining the penetration holes of the honeycomb structural body consisting essentially of cordierite ceramics of a porosity of 20-45%.

This method described requires further steps such as applying a slip as a filling material on the fired cordierite honeycomb and refiring it, so that there are drawbacks of risk of plugging of holes of the cells and of high cost.

The present invention aims to obviate or reduce these shortcomings and provide a highly airtight cordierite honeycomb structural body attaining compatibility between the airtight property and the low thermal expansion property, which is difficult in the conventional cordierite ceramics.

The invention in one aspect provides a cordierite honeycomb structural body as set out in claim 1.

The invention also provides a method of producing a cordierite honeycomb structural body as set out in claim 9.

The invention further provides a cordierite honeycomb structural body as set out in claim 4.

The average particle diameters specified here for talc and kaolin are average diameters calculated by weight where blends are used, of all talc or kaolin used, including calcined talc or kaolin.

Reference is now made to the accompanying drawings, in which:-

Fig. I is a graph showing a relation between the amount of pores of a pores diameter of not less than 5 μm and the leakage amount of test pieces under air pressure of I.4 kg/cm².

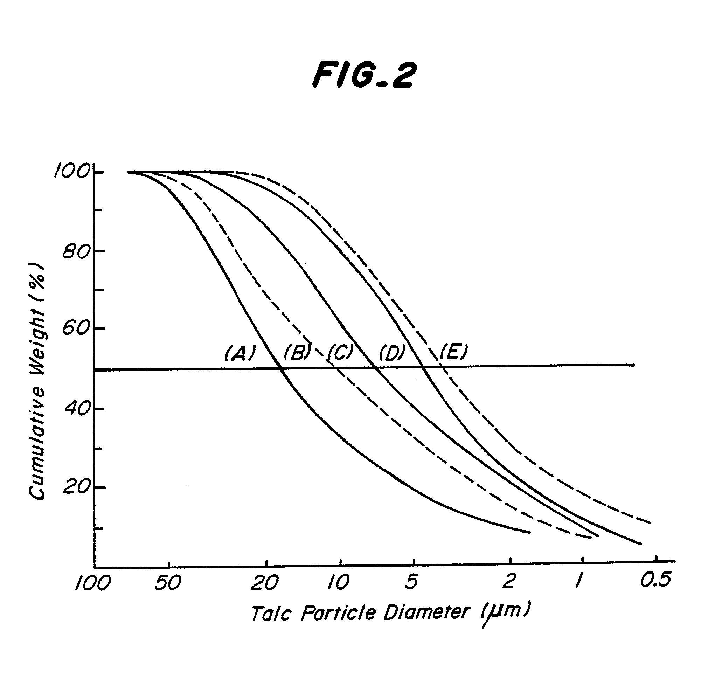

Fig. 2 is a graph showing particle size distribution curves of fine talc raw materials used in the following Examples, in particular talcs (A) to (F) of Table I;

Fig. 3 is a graph showing particle size distribution curves of fine kaoline raw materials used in the following Examples, in particular kaolines (A) to (E) of Table I;

Figs. 4A and 4b are schematic perspective views showing an embodiment of rotary accumulating type heat exchanger of the present invention; and

Fig. 5 is a graph showing relations between the amount of pores of a pore diameter of not less than 2 μm and the leakage amount of test pieces under air pressure of I.4 kg/cm².

The inventors have found out that in a cordierite honeycomb structural body, the total pore volume of a pore diameter of not less than 5 μm is restricted to not more than 0.04 cm³/g by using very fine talc of an average particle diameter of not more than 7 μm and very fine kaolin of an average particle diameter of not more than 2 μm and not exceeding one-third (I/3) of the average particle diameter of talc, whereby a substantially airtight cordierite honeycomb structural body of the coefficient of thermal expansion of not more than $1.0 \times 10^{-6}/°C$ in a temperature range of 40-800°C is produced. Restriction of the average particle diameter of talc particles to not more than 7 μm is effective for making the pore diameter small. Further, use of kaolin particles of an average particle diameter of not more than 2 μm is effective for controlling the porosity. Furthermore, use of a combination of talc particles of an average particle diameter of not more than 7 μm and kaolin particles of an average diameter of not exceeding one-third (I/3) of the average particle diameter of talc accelerates the orientation of the cordierite crystals at the partition walls of the cordierite honeycomb structural body, which contributes to low thermal expansion.

According to the invention, the honeycomb structural body has a chemical composition in weight basis of 42-56%, preferably 47-53% of $SiO_2$, 30-45%, preferably 32-38% of $Al_2O_5$ and 12-16%, preferably 12.5-15% of MgO. The honeycomb structure may additionally contain unavoidably present components such as $TiO_2$, CaO, KNaO, $Fe_2O_3$ in total amount of not more than 2.5%, and the content of $P_2O_5$ is less than 0.1%. The reason for restricting these contents is due to the fact that the crystalline phases consist essentially of cordierite crystal phase and the high thermal expansion glass phases resulting from impurities are removed.

The inventors have also found that in firing of the dried extruded article of honeycomb structure, the heating temperature is preferably elevated at an average temperature increase rate of 20-60°C/hr in a temperature range of 1,100-1,350°C immediate before the firing, and thereafter it is preferably fired at a temperature of 1,350-1,440°C. If the average temperature increase rate is less than 20°C/hr, the coefficient of thermal expansion may be large, and if it exceeds 60°C/hr, the pore diameter may become large in firing, as a result of which the airtight property is deteriorated. Usually, it is preferably within a range of 30-50°C/hr. In addition, the crystal phases can consist essentially of cordierite crystal phase by firing the dried extruded article at a temperature of 1,350-1,440°C.

The reason for restricting the preferred cell density per unit area to not less than 62 cells/cm² (400 cells/in²) and restricting the partition wall thickness to not more than 203 μm (8 mil) in the honeycomb structural body is due to the fact that the honeycomb structural body can act as a heat exchanger of high heat exchanging efficiency and low pressure loss. The cell shape is not intended to be a limitations but can usually be a triangle, square, rectangle, hexagon, or others, and provided with a fin, and so on.

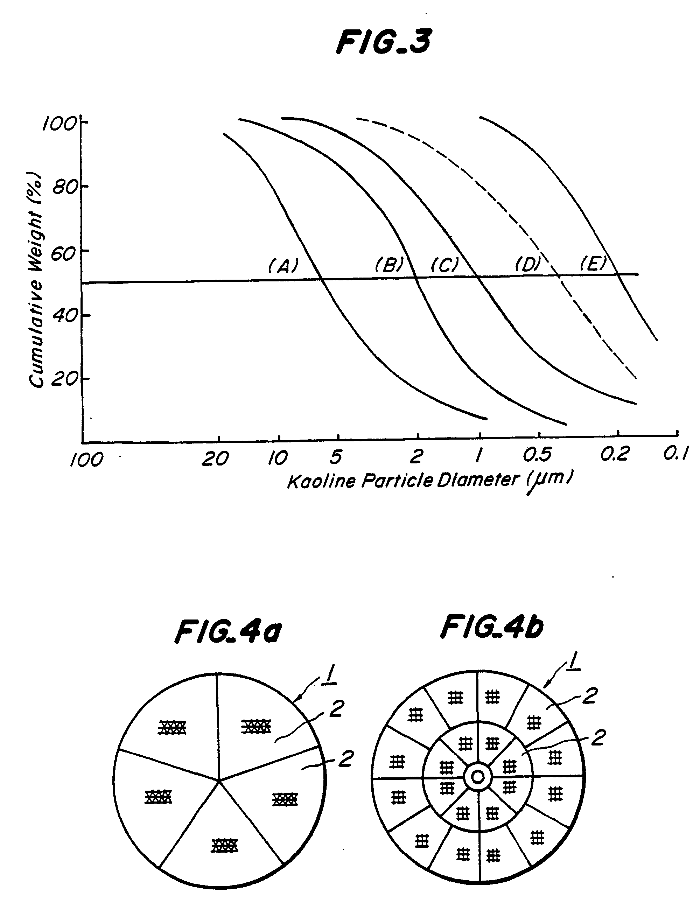

The reason for restricting the total pore volume of a pore diameter of not less than 5 μm to not more than 0.04 cm³/g, preferably not more than 0.026 cm³/g is due to the fact that the fluid leakage through thin walls of the honeycomb structure as shown in Figs. 4a and 4b results mainly from pores of a pore diameter of not less than 5 μm. In order to satisfy this condition, the porosity is preferably restricted to not more than 30%. Referring to Figs. 4a and 4b, a rotary cordierite heat regenerator I of heat accumulator type comprises a plurality of matrix segments 2 of honeycomb structural body, each of which matrix segments 2 mainly consists of cordierite.

The present invention includes use of calcined talc and calcined kaolin which are effective for preventing the formation of cracks in the honeycomb structural bodies caused by shrinkage, etc. during the drying and firing steps, when using the fine raw materials kaolin and talc. Use of a higher temperature for calcining talc and kaolin incurs increase of porosity and the coefficient of thermal expansion of the resultant honeycomb structural bodies, so that the calcining temperature should preferably be made as low as possible, if calcined talc or kaolin is used. The unexpected effects of the present invention cannot be attained, unless the same limits for the fine particles of calcined talc and kaolin are used as for the raw talc and kaolin.

The other raw materials for cordierite, namely, an alumina source material such as alumina, aluminum hydroxide, etc., and a silica source material such as amorphous silica, quartz sand, etc., can be the same as those used conventionally. However, the amount of impurities such as alkali in the chemical composition of the raw materials should be properly adjusted, and particle size of raw materials should be properly adjusted by excluding coarse particles, depending on thickness of the partition walls of the honeycomb structural bodies to be produced.

Thus, according to the invention, there may be produced a cordierite honeycomb structural body comprising crystal phases consisting essentially of cordierite, total pore volume of a pore diameter of not less than 5 $\mu$m of not more than 0.04 cm$^3$/g and coefficient of thermal expansion of not more than $1.0 \times 10^{-6}/^{\circ}$C in a temperature range of 40-800$^{\circ}$C, by preparing the mixture of very fine talc of an average particle diameter of not more than 7 $\mu$m, very fine kaolin of an average particle diameter of not more than 2 $\mu$m and not exceeding one-third (1/3) of the average particle diameter of talc and other raw materials so as to produce the cordierite of a chemical composition on a weight basis of 42-56%, preferably 47-53% of SiO$_2$, 30-45%, preferably 32-38% of Al$_2$O$_3$, 12-16%, preferably 12.5-15% of MgO and less than 0.1% P$_2$O$_5$, adding a plasticizer and a binder to the mixture to obtain a plasticized deformable batch, extruding the plasticized batch to form a honeycomb structural body, drying the extruded honeycomb structural body, elevating the temperature of the dried honeycomb structural body at an average temperature increase rate of 20-60$^{\circ}$C/hr in a temperature range of 1,100-1,350$^{\circ}$C immediately before the firing , and firing the honeycomb structural body at a temperature of 1,350-1,440$^{\circ}$C.

The firing process is usually carried out for about 0.5-12 hours. The resulting honeycomb structural body has crystalline phases consisting essentially of not less than 90% by weight of cordierite. Other crystals consist essentially of mullite and spinel inclusive of sapphirine, but the amounts thereof are not more than 2.5% by weight, respectively. When the total pore volume of a pore diameter of not less than 5 $\mu$m is not exceeding 0.04 cm$^3$/g, particularly not exceeding 0.026 cm$^3$/g, the honeycomb structural body substantially exhibits an airtight property of a leakage amount of not more than 100 g/sec.m$^2$, particularly not more than 50 g/sec.m$^2$ under pressure of 1.4 kg/cm$^2$, and consequently is suitable to be used for a heat exchanger.

The inventors have also found out that, if in a cordierite honeycomb structure, the total pore volume of a pore diameter of not less than 2 $\mu$m is restricted to not more than 0.05 cm$^3$/g or the total pore volume of a pore diameter of not less than 2 $\mu$m in the porosity of less than 25% to not more than 0.08 cm$^3$/g by using very fine talc of an average particle diameter of not more than 5 $\mu$m, very fine kaolin of an average particle diameter of not more than 2 $\mu$m and not exceeding one-third (1/3) of the average particle diameter of talc, and very fine alumina and/or aluminum hydroxide of an average particle diameter of not more than 2 $\mu$m, or highly pure amorphous silica of an average particle diameter of not more than 8 $\mu$m therewith, a substantially airtight cordierite honeycomb structural body of the coefficient of thermal expansion of not more than $1.0 \times 10^{-6}/^{\circ}$C in a temperature range of 40-800$^{\circ}$C is produced. Restriction of the average particle diameter of talc particles to not more than 5 $\mu$m is effective for making the pore diameter small. Further, use of kaolin particles of an average particle diameter of not more than 2 $\mu$m is effective for controlling the porosity. Furthermore, use of a combination of talc particles of an average particle diameter of not more than 5 $\mu$m and kaolin particles of an average diameter of not exceeding one-third (1/3) of the average particle diameter of talc accelerates the orientation of the cordierite crystals at the partition walls of the cordierite honeycomb structural body, which contributes to low thermal expansion.

Use of alumina and/or aluminum hydroxide particles of an average particle diameter of not more than 2 $\mu$m attains fine pore diameter and low porosity, which has not been obtained only with the use of fine talc and kaolin particles.

Further, among various aluminas, alumina of low sodium content is used to obtain a stable fine pore diameter. Restriction of the average particle diameter of highly pure amorphous silica particles to not more than 8 $\mu$m is effective for controlling the pore diameter and the porosity. In this case, it is important that the silica is amorphous. For instance, crystalline silicas such as quartz and so on unfavorably result in the considerable increase in porosity. In addition to fine alumina and/or aluminum hydroxide particles, use of amorphous silica gives considerably low thermal expansion.

Control of the particle sizes of the raw materials such as alumina and/or aluminum hydroxide or amorphous silica renders it unnecessary to especially limit the average temperature raising rate, so that the rapid rate of not less than 50$^{\circ}$C/hr capable of attaining low thermal expansion becomes applicable, which is seen to be preferred to improve the thermal shock resistance. In addition, the crystalline phases can consist essentially of cordierite crystalline phase by firing the honeycomb structural body at a temperature of 1,350-1,440 °C.

The reason for as is preferred restricting the total pore volume of a pore diameter of not less than 2 $\mu$m to not more than 0.05 cm$^3$/g, preferably not more than 0.03 cm$^3$/g or the total pore volume of a pore diameter of not less than 2 $\mu$m in the porosity of less than 25% to not more than 0.08 cm$^3$/g, preferably not more than 0.05 cm$^3$/g is due to the fact that the fluid leakage through thin walls of the honeycomb structure as shown in Figs. 4a and 4b results mainly from pores of a pore diameter of not less than 2 $\mu$m. In order to satisfy this condition, the porosity is preferably restricted to not more than 30%, preferably not more than 25%.

The present invention can include use of calcined talc and calcined kaoline even when using fine alumina and/or aluminum hydroxide.

Thus, according to the invention, there is produced a cordierite honeycomb structural body comprising crystalline phases consisting essentially of cordierite, total pore volume of a pore diameter of not less than 2 $\mu$m of not more than 0.05 cm$^3$/g or, in the porosity of less than 25%, of not more than 0.08 cm$^3$/g, and coefficient of thermal expansion of not more than $1.0 \times 10^{-6}$/°C in a temperature range of 40-800 °C, by preparing the mixture of very fine talc of an average particle diameter of not more than 5 $\mu$m, very fine kaolin of an average particle diameter of not more than 2 $\mu$m and not exceeding one-third (1/3) of the average particle diameter of talc, very fine alumina and/or aluminum hydroxide of an average particle diameter of not more than 2 $\mu$m and other raw materials so as to produce the cordierite of a chemical composition in weight basis of 42-56%, preferably 47-53% of $SiO_2$, 30-45%, preferably 32-38% of $Al_2O_3$, 12-16%, preferably 12.5-15% of MgO, and less than 0.1% $B_2O_5$, adding a plasticizer and a binder to the mixture to obtain a plasticized deformable batch, extruding the plasticized batch to form a honeycomb structural body, drying the extruded honeycomb structural body, and firing the honeycomb structural body at a temperature of 1,350-1,440 °C.

Further, according to the invention there is produced a cordierite honeycomb structural body comprising crystalline phases consisting essentially of cordierite, total pore volume of a pore diameter of not less than 2 $\mu$m of not more than 0.05 cm$^3$/g or, in the porosity of less than 25%, of not more than 0.08 cm$^3$/g, and coefficient of thermal expansion of not more than $0.6 \times 10^{-6}$/°C in a temperature range of 40-800 °C, by preparing the mixture of very fine talc of an average particle diameter of not more than 5 $\mu$m, very fine kaolin of an average particle diameter of not more than 2 $\mu$m and not exceeding one-third (1/3) of the average particle diameter of talc, very fine alumina and/or aluminum hydroxide of an average particle diameter of not more than 2 $\mu$m, highly pure amorphous silica of an average particle diameter of not more than 8 $\mu$m and other raw materials so as to produce the cordierite of a chemical composition in weight basis of 42-56%, preferably 47-53% of $SiO_2$, 30-45%, preferably 32-38% of $Al_2O_3$, 12-16%, preferably 12.5-15% of MgO and less than 0.1% $B_2O_5$, adding a plasticizer and a binder to the mixture to obtain a plasticized deformable batch, extruding the plasticized batch to form a honeycomb structural body, drying the extruded honeycomb structural body, and firing the honeycomb structural body at a temperature of 1,350-1,440 °C.

When the total pore volume of a pore diameter of not less than 2 $\mu$m is not exceeding 0.05 cm$^3$/g, particularly not exceeding 0.03 cm$^3$/g, the honeycomb structural body substantially exhibits an airtight property of a leakage amount of not more than 30 g/sec.m$^2$, particularly not more than 20 g/sec.m$^2$ under pressure of 1.4 kg/cm$^2$, and consequently is excellent for use for a heat exchanger.

In the honeycomb structural body according to the invention, the total pore volume of a pore diameter of not less than 5 $\mu$m is not more than 0.04 cm$^3$/g and the porosity is preferably not more than 30%, so that the leakage amount is small and the heat exchanging efficiency is high. Further, the coefficient of thermal expansion is small as not more than $1.0 \times 10^{-6}$/°C in a temperature of 40-800 °C, so that the thermal shock resistance is high.

Further, in the preferred honeycomb stuctural body according to the invention, the total pore volume of a pore diameter of not less than 2 $\mu$m is not more than 0.05 cm$^3$/g or the total volume pores of a pore diameter of not less than 2 $\mu$m in the porosity of less than 25% is not more than 0.08 cm$^3$/g, so that the leakage amount is smaller and the heat exchanging efficiency is higher. In addition, the coefficient of thermal expanion is small as not more than $1.0 \times 10^{-6}$/°C, preferably very small as not more than $0.6 \times 10^{-6}$/°C in a temperature of 40-800 °C, so that the thermal shock resistance is very higher. Furthermore, it is possible to make the walls thin as the partition wall thickness of not more than 203 $\mu$m (8 mil), so that the pressure loss is small and a high density of cells is attained. Therefore, a ceramic heat exchanger of high heat exchanging efficiency can be obtained. Furthermore, the pore diameter is small and the porosity is also small, so that the strength of the honeycomb structural body is higher than that of the conventional honeycomb structural body and consequently thin walls can be attained.

Hereinafter, the present invention will be explained in more detail with reference to Examples.

5

Example 1

Raw materials of chemical compositions and particle sizes as shown in the following Table 1 are mixed based on the batch composition and the particle sizes of talc and kaolin as shown in Table 2 to prepare batches of Nos. 1-30 of Table 2. To 100 parts by weight of each batch is added 4.5 parts by weight of methylcellulose and a suitable amount of water and the resulting mixture is kneaded to produce an extrudable blend. The used raw materials are preliminarily passed through a sieve of 63 μm. Thereafter, each blend of the respective batch is formed by a publicly known extrusion means into a cylindrical honeycomb structural body of a diameter of 93 mm and a height of 100 mm having a rectangular cell structure (short side/long side = 1/1.73), a cell number of 167 per cm² and a partition wall thickness of 120 μm. Each honeycomb structural body is dried and fired at a firing condition as shown in Table 2 to obtain sintered honeycomb structural bodies. The sintered bodies are evaluated on coefficient of thermal expansion (CTE) in a temperature range of 40-800C, porosity, total pore volume of pore diameter of not less than 5 μm, leakage amount, amount of cordierite crystals, and thermal shock resistance as properties of the sintered bodies. The results of the evaluation are also shown in Table 2. All the sintered bodies have chemical compositions of $P_2O_5$ content of less than 0.1%.

Example 2

The batch of No. 4 of Table 2 are extruded from dies of different cell structures in the same manner as in Example 1, and the green honeycomb structural bodies are fired to produce cylindrical honeycomb structural bodies of Nos. 31-40 of a diameter of 93 mm and a height of 100 mm and cell structures as shown in Table 3. Thus produced honeycomb structural bodies are evaluated on pressure loss, leakage amount and coefficient of thermal expansion (CTE). The results of the evaluation are also shown in Table 3.

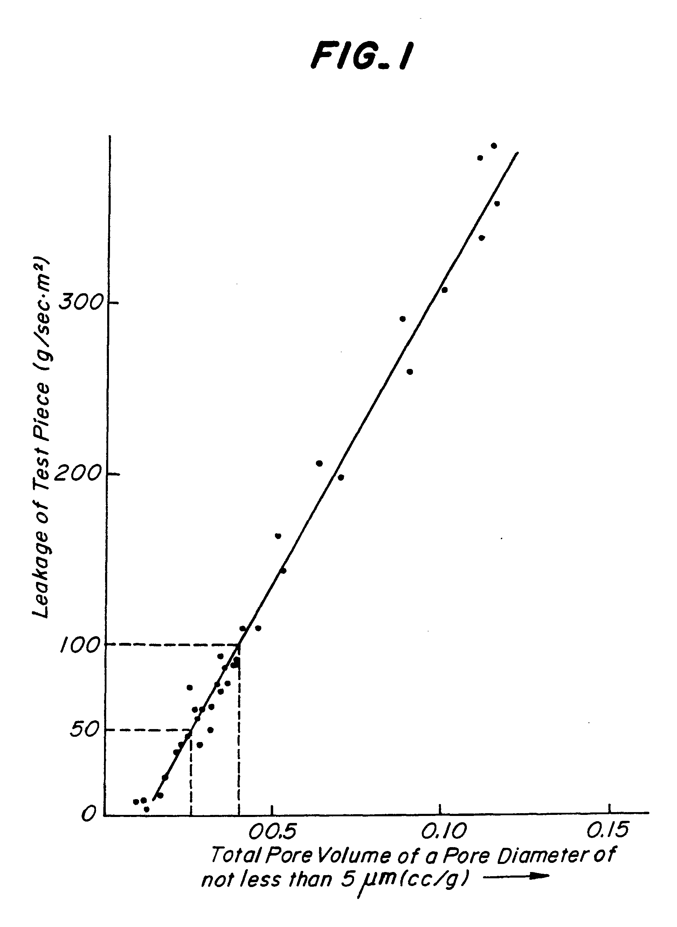

Referring now to the graph of Fig. 1, this shows the relationship between total pore volume (cm³/g) of a pore diameter of not less than 5 μm and the leakage of test pieces (g/sec.m²) measured in the manner described as a note to Table 2, both for samples taken from Table 2 and for other samples on which pore size measurements and leakage measurements were made in the same way.

Table 1(a)

| | Average particle diameter (μm) | Ig.loss | $SiO_2$ | $Al_2O_3$ | MgO | $TiO_2$ | $Fe_2O_3$ | $CaO+Na_2O \cdot K_2O$ |
|---|---|---|---|---|---|---|---|---|
| Talc (A) | 18.0 | 5.8 | 61.2 | 0.9 | 30.9 | – | 0.8 | 0.3 |
| Talc (B) | 10.5 | 5.7 | 60.9 | 1.2 | 30.8 | – | 0.9 | 0.3 |
| Talc (C) | 7.0 | 5.6 | 61.3 | 0.9 | 30.9 | – | 0.9 | 0.3 |
| Talc (D) | 4.5 | 5.7 | 60.8 | 1.3 | 30.8 | – | 1.0 | 0.3 |
| Talc (E) | 3.7 | 5.7 | 61.1 | 1.1 | 30.8 | – | 0.9 | 0.3 |
| Talc (F) | 5.0 | 5.7 | 61.6 | 0.9 | 30.5 | – | 0.8 | 0.3 |
| Calcined talc *1) | 4.5 | 0.1 | 64.4 | 1.4 | 32.6 | – | 1.0 | 0.3 |
| Kaolin (A) | 5.9 | 13.9 | 45.6 | 38.7 | – | 0.8 | 0.3 | 0.2 |
| Kaolin (B) | 2.0 | 13.9 | 45.7 | 38.8 | – | 0.9 | 0.3 | 0.2 |
| Kaolin (C) | 1.0 | 13.9 | 45.5 | 38.6 | – | 1.0 | 0.4 | 0.2 |
| Kaolin (D) | 0.4 | 13.9 | 45.5 | 38.6 | – | 0.8 | 0.4 | 0.2 |
| Kaolin (E) | 0.2 | 13.9 | 45.2 | 37.9 | – | 1.4 | 0.8 | 0.2 |

EP 0 227 482 B1

EP 0 227 482 B1

Table 1(b)

| | Average particle diameter (μm) | Ig.loss | $SiO_2$ | $Al_2O_3$ | MgO | $TiO_2$ | $Fe_2O_3$ | $CaO+Na_2O+K_2O$ |
|---|---|---|---|---|---|---|---|---|
| Calcined kaolin (A)*2 | 1.0 | 0.1 | 53.1 | 45.0 | – | 0.9 | 0.4 | 0.2 |
| Calcined kaolin (B)*3 | 2.0 | 0.1 | 53.1 | 45.1 | – | 0.8 | 0.4 | 0.2 |
| Calcined kaolin (C)*4 | 5.9 | 0.1 | 53.2 | 45.0 | – | 0.8 | 0.4 | 0.2 |
| Alumina | 4.0 | 0.2 | – | 99.2 | – | – | – | 0.3 |
| Aluminum hydroxide | 1.2 | 33.7 | – | 64.5 | – | – | – | 0.3 |
| Silica | 9.1 | 0.3 | 99.4 | 0.1 | – | – | 0.1 | – |

*1) Prepared by firing talc (D) at 1000°C for 2 hours
*2) Prepared by firing kaolin (C) at 1000°C for 4 hours
*3) Prepared by firing kaolin (B) at 1000°C for 4 hours
*4) Prepared by firing kaolin (A) at 1000°C for 4 hours
* Particle size distributions and average particle diameter are those based on the principle of X-ray sedimentation method, and measured by Sedigraph (Trade name) of Micrometrics Co.

Ig.loss is ignition loss, i.e. the weight reduction (in %) on strong heating at 1100°C in an oxidizing atmosphere and represents the total content of absorbed water and water of crystallization.

Table 2(a)-1

| Test No. | Batch composition (wt%) | | | | | | | Ratio of average particle diameter (kaolin/talc) |
|---|---|---|---|---|---|---|---|---|
| | Talc (average particle diameter μm) | Calcined talc | Kaolin (average particle diameter μm) | Calcined kaolin (average particle diameter μm) | Alumina | Aluminum hydroxide | Silica | |
| 1 | 41.0(10.5) | - | 25.0(0.4) | 20.5(1.0) | 13.5 | - | - | 1/16 |
| 2 | 41.0(7.0) | - | 25.0(0.4) | 20.5(1.0) | 13.5 | - | - | 1/10 |
| 3 | 41.0(4.5) | - | 25.0(0.4) | 20.5(1.0) | 13.5 | - | - | 1/6.7 |
| 4 | 41.0(3.7) | - | 25.0(0.4) | 20.5(1.0) | 13.5 | - | - | 1/5.5 |
| 5 | 41.0(4.5) | - | 25.0(0.2) | 20.5(1.0) | 13.5 | - | - | 1/8.0 |
| 6 | 41.0(3.7) | - | 25.0(0.2) | 20.5(1.0) | 13.5 | - | - | 1/6.6 |
| 7 | 41.0(4.5) | - | 25.0(5.9) | 20.5(5.9) | 13.5 | - | - | 1/0.8 |
| 8 | 41.0(7.0) | - | 25.0(2.0) | 20.5(1.0) | 13.5 | - | - | 1/4.5 |
| 9 | 41.0(4.5) | - | 25.0(1.0) | 20.5(1.0) | 13.5 | - | - | 1/4.5 |
| 10 | 41.0(4.5) | - | 25.0(0.4) | 20.5(1.0) | 13.5 | - | - | 1/6.7 |
| 11 | 41.0(4.5) | - | 25.0(0.4) | 20.5(1.0) | 13.5 | - | - | 1/6.7 |
| 12 | 41.0(4.5) | - | 20.5(0.4) | 25.0(1.0) | 13.5 | - | - | 1/6.7 |
| 13 | 41.0(4.5) | - | 25.0(0.4) | 20.5(1.0) | 13.5 | - | - | 1/6.7 |
| 14 | 40.5(4.5) | - | 25.0(0.4) | 25.8(1.0) | 13.7 | - | - | 1/6.1 |
| 15 | 40.5(4.5) | - | 20.0(0.4) | 25.8(1.0) | 13.7 | - | - | 1/6.1 |

EP 0 227 482 B1

## Table 2(a)-2

| Test No. | Firing conditions | | | Properties of sintered body | | | | | |
| --- | --- | --- | --- | --- | --- | --- | --- | --- | --- |
| | *1 Temperature raising rate (°C/Hr) | Maximum temperature (°C) | Holding time (Hr) | CTE ×10⁻⁶ (/°C) | *2 Porosity (%) | *3 Total volume of pores of a pore diameter of not less than 5 μm (cm³/g) | *4 Leakage amount (g/s·m²) | *5 Amount of cordierite crystal (wt%) | *6 Thermal shock resistance (°C) |
| 1 | 50 | 1410 | 6 | 0.5 | 30.5 | 0.088 | 292 | 95 | 850 |
| 2 | 50 | 1410 | 6 | 0.5 | 29.8 | 0.037 | 78 | 94 | 900 |
| 3 | 50 | 1410 | 6 | 0.6 | 27.6 | 0.026 | 49 | 95 | 850 |
| 4 | 60 | 1410 | 6 | 0.7 | 26.9 | 0.022 | 37 | 95 | 800 |
| 5 | 40 | 1415 | 8 | 0.5 | 25.9 | 0.013 | 5 | 93 | 900 |
| 6 | 40 | 1415 | 8 | 0.6 | 25.0 | 0.010 | 8 | 93 | 850 |
| 7 | 30 | 1420 | 6 | 1.1 | 31.2 | 0.053 | 145 | 91 | 700 |
| 8 | 30 | 1420 | 6 | 1.0 | 30.0 | 0.040 | 92 | 92 | 750 |
| 9 | 30 | 1420 | 6 | 0.8 | 27.2 | 0.025 | 44 | 93 | 800 |
| 10 | 15 | 1410 | 6 | 1.1 | 25.8 | 0.012 | 8 | 93 | 700 |
| 11 | 20 | 1410 | 6 | 0.9 | 26.0 | 0.018 | 22 | 95 | 750 |
| 12 | 35 | 1410 | 6 | 0.7 | 26.2 | 0.026 | 45 | 96 | 800 |
| 13 | 80 | 1410 | 6 | 0.4 | 29.4 | 0.046 | 110 | 94 | 900 |
| 14 | 60 | 1350 | 12 | 1.0 | 30.0 | 0.039 | 89 | 90 | 750 |
| 15 | 60 | 1430 | 2 | 0.6 | 26.1 | 0.034 | 78 | 94 | 850 |

Table 2(b)-1

| Test No. | Batch composition (wt%) | | | | | | | Ratio of average particle diameter (kaoline/ talc) |
|---|---|---|---|---|---|---|---|---|
| | Talc (average particle diameter μm) | Calcined talc | Kaoline (average particle diameter μm) | Calcined kaoline (average particle diameter μm) | Alumina | Aluminum hydroxide | Silica | |
| 16 | 40.5(4.5) | - | 20.0(0.4) | 25.8(1.0) | 13.7 | - | - | 1/6.1 |
| 17 | 39.0(4.5) | - | 20.0(5.9) | 15.0(5.9) | 10.5 | 10.5 | 5.0 | 1/0.8 |
| 18 | 40.7(18) | - | 28.1(5.9) | 16.7(5.9) | 14.5 | - | - | 1/3.1 |
| 19 | 40.7(18) | - | 28.1(5.9) | 16.7(5.9) | 14.5 | - | - | 1/3.1 |
| 20 | 30.5(4.5) | 10.0 | 21.7(0.2) | 23.3(1.0) | 14.5 | - | - | 1/7.3 |
| 21 | 24.2(3.7) | 15.0 | 20.8(0.2) | 25.1(1.0) | 14.9 | - | - | 1/6.3 |
| 22 | 39.1(4.5) | - | - | - | 19.1 | 19.2 | 22.6 | - |
| 23 | 40.7(5.0) | - | 28.1(2.0) | 16.7(1.0) | 14.5 | - | - | 1/3.1 |
| 24 | 40.7(3.7) | - | 28.1(2.0) | 16.7(1.0) | 14.5 | - | - | 1/2.3 |
| 25 | 40.7(4.5) | - | 28.1(2.0) | 16.7(2.0) | 14.5 | - | - | 1/2.3 |
| 26 | 40.7(5.0) | - | 28.1(0.2) | 16.7(1.0) | 14.5 | - | - | 1/10 |
| 27 | 40.7(5.0) | - | 28.1(1.0) | 16.7(1.0) | 14.5 | - | - | 1/5.0 |
| 28 | 40.7(5.0) | - | 28.1(0.2) | 16.7(2.0) | 14.5 | - | - | 1/5.7 |
| 29 | 40.7(7.0) | - | 28.1(0.2) | 16.7(2.0) | 14.5 | - | - | 1/8.0 |
| 30 | 40.7(7.0) | - | 28.1(2.0) | 16.7(2.0) | 14.5 | - | - | 1/3.5 |

## Table 2(b)-2

| Test No. | Firing conditions | | | Properties of sintered body | | | | | |
|---|---|---|---|---|---|---|---|---|---|
| | *1 Temperature raising rate (°C/Hr) | Maximum temperature (°C) | Holding time (Hr) | CTE ×10⁻⁶ (/°C) | *2 Porosity (%) | *3 Total volume of pores of a pore diameter of not less than 5 μm ($cm^3$/g) | *4 Leakage amount (g/s·m²) | *5 Amount of cordierite crystal (wt%) | *6 Thermal shock resistance (°C) |
| 16 | 60 | 1440 | 0.5 | 0.5 | 25.8 | 0.032 | 64 | 91 | 850 |
| 17 | 50 | 1410 | 6 | 1.2 | 31.0 | 0.110 | 387 | 90 | 650 |
| 18 | 50 | 1410 | 6 | 0.7 | 35.8 | 0.114 | 393 | 96 | 800 |
| 19 *7 | 50 | 1410 | 24 | 1.1 | 28.2 | 0.070 | 54 | 88 | 700 |
| 20 | 40 | 1410 | 0.5 | 0.6 | 28.2 | 0.025 | 43 | 95 | 850 |
| 21 | 40 | 1410 | 6 | 0.8 | 28.7 | 0.024 | 43 | 95 | 800 |
| 22 | 50 | 1415 | 6 | 1.1 | 38.0 | 0.148 | >400 | 90 | 700 |
| 23 | 30 | 1415 | 6 | 1.0 | 29.7 | 0.037 | 88 | 94 | 750 |
| 24 | 30 | 1415 | 6 | 1.2 | 28.8 | 0.030 | 62 | 94 | 650 |
| 25 | 30 | 1415 | 6 | 1.1 | 29.1 | 0.035 | 81 | 94 | 700 |
| 26 | 40 | 1410 | 6 | 0.6 | 27.2 | 0.023 | 37 | 93 | 850 |
| 27 | 40 | 1410 | 6 | 0.8 | 27.9 | 0.026 | 50 | 93 | 800 |
| 28 | 40 | 1410 | 6 | 0.7 | 27.4 | 0.024 | 40 | 93 | 800 |
| 29 | 20 | 1425 | 8 | 0.6 | 28.9 | 0.035 | 78 | 95 | 850 |
| 30 | 20 | 1425 | 8 | 0.7 | 29.5 | 0.040 | 98 | 96 | 800 |

*1 Average temperature raising/rate (*increase*) in a temperature range of 1,100-1,350°C

*2 Mercury porosimeter. Calculated on total pore volume
(assumed cordierite true density of 2.52)

*3 Mercury porosimeter

*4 Measured with the use of honeycomb structural bodies having a test piece shape
of 75 mm$\phi$ × 60 mm$\ell$ and no outer wall under air pressure of 1.4 kg/cm$^2$.
Measuring method is performed in accordance with "Ceramic Regenerator
System Development Program-Final Report" on page 213 in USA DOE/NASA/0008-12,
NASACR-165139

*5 X-ray diffraction. Quantitative values on ZnO internal standard

*6 Durable temperature when held for 30 min in an electric furnace and
exposing to room temperature.

*7 Glass powder or cordierite powder is deposited on the No. 18 sintered body
such that 20% of the powder adhered to open pores.

<u>Remarks</u>

Test No. 1 shows the effect of large particle size of talc.

Test Nos. 7 and 17 show the effects of large particle size of kaoling to talc.

Test Nos. 10 and 13 show the effects of low and high temperature increase rates.

Test No. 18 shows the effect of large particle size of talc.

Test No. 19 is derived from US-A-4 489 774.

In Test No. 22 no kaoling is used.

Test Nos. 24 and 25 also show effects of large particle size of kaoling relative to talc.

EP 0 227 482 B1

Table 3

| No. | 31 | 32 | 33 | 34 | 35 | 36 | 37 | 38 | 39 | 40 |
|---|---|---|---|---|---|---|---|---|---|---|
| Cell shape | Square | | | | Triangle | | | Rectangle $\left(\dfrac{\text{Long side}}{\text{Short side}}=1.73/1\right)$ | | |
| Wall thickness (μm) | 203 | 152 | 102 | 102 | 140 | 90 | 90 | 120 | 102 | 90 |
| Cell density (cell/cm²) | 62 | 93 | 93 | 190 | 145 | 190 | 250 | 167 | 217 | 248 |
| Pressure loss * (mmH$_2$O/mm) | 0.40 | 0.55 | 0.48 | 0.81 | 0.97 | 0.98 | 1.18 | 0.92 | 1.21 | 1.43 |
| Leakage amount ** (g/s·m²) | 57 | 49 | 52 | 48 | 32 | 56 | 51 | 37 | 48 | 47 |
| CTE (×10$^{-6}$/°C(40-800°C)) | 0.6 | 0.6 | 0.6 | 0.6 | 0.7 | 0.7 | 0.8 | 0.6 | 0.7 | 0.8 |

* Pressure loss per unit length measured at flow rate of 0.5 g/sec·cm²

** Measured with the use of honeycomb structural bodies having a test piece shape of 75 mmφ×60 mmℓ and no outer wall under air pressure of 1.4 kg/cm²

Example 3

Raw materials of chemical compositions and particle sizes as shown in the following Table 4 are mixed based on the batch composition and the particle sizes of talc and kaolin as shown in Table 5 to prepare batches of Nos. I0I-I40 of Table 5. To 100 parts by weight of the mixed batch of the raw materials are added

14

EP 0 227 482 B1

4.5 parts by weight of methylcellulose and a suitable amount of water and the resulting mixture is kneaded to produce an extrudable blend. The raw materials are all preliminarily treated to pass a sieve of 63 $\mu$m. Then, each blend of the respective batch is formed by a publicly known extrusion means into a cylindrical honeycomb structural body of a diameter of 93 mm and a height of l00 mm having a partition wall thickness of l20 $\mu$m, a cell number of l67 per cm$^2$ and a rectangular cell structure (short side/long side = l/l.73). The honeycomb structural bodies of respective batches are dried and fired at firing conditions shown in Table 5 to obtain sintered honeycomb structural bodies. The sintered bodies are evaluated on coefficient of thermal expansion (CTE) in 40-800 $^\circ$C, total pore volume of a pore diameter of not less than 2 $\mu$m, leakage amount, amount of cordierite crystals, and thermal shock resistant as properties of the sintered bodies. The results of the evaluation are also shown in Table 5. All the sintered bodies have chemical compositions of $P_2O_5$ content of less than 0.l%.

15

EP 0 227 482 B1

Table 4(a)

| | Average particle diameter (μm) | Ig.loss | $SiO_2$ | $Al_2O_3$ | MgO | $TiO_2$ | $Fe_2O_3$ | $CaO+Na_2O+K_2O$ |
|---|---|---|---|---|---|---|---|---|
| Talc (a) | 7.5 | 5.6 | 61.3 | 1.0 | 30.7 | – | 1.0 | 0.3 |
| Talc (b) | 5.0 | 5.7 | 60.9 | 1.2 | 30.8 | – | 0.9 | 0.3 |
| Talc (c) | 3.0 | 5.7 | 61.2 | 0.9 | 30.9 | – | 0.9 | 0.3 |
| Kaoline (a) | 2.0 | 13.9 | 45.6 | 38.7 | – | 0.8 | 0.3 | 0.2 |
| Kaoline (b) | 1.0 | 13.9 | 45.7 | 38.7 | – | 0.8 | 0.3 | 0.2 |
| Kaoline (c) | 0.4 | 13.9 | 45.5 | 38.8 | – | 1.0 | 0.4 | 0.2 |
| Kaoline (d) | 0.2 | 13.9 | 45.3 | 38.1 | – | 1.4 | 0.6 | 0.2 |
| Calcined kaoline (a) | 2.0 | 0.1 | 53.1 | 45.1 | – | 0.9 | 0.4 | 0.2 |
| Calcined kaoline (b) | 1.0 | 0.1 | 53.2 | 45.1 | – | 0.9 | 0.4 | 0.2 |
| Calcined kaoline (c) | 0.8 | 0.1 | 53.2 | 45.0 | – | 0.8 | 0.4 | 0.2 |
| Alumina (a) | 4.0 | 0.3 | – | 99.2 | – | – | – | 0.33 ⎫ |
| Alumina (b) | 2.0 | 0.2 | – | 99.3 | – | – | – | 0.34 ⎬ |
| Alumina (c)*1 | 1.7 | 0.2 | – | 99.5 | – | – | – | 0.12 ⎬ $Na_2O$ |
| Alumina (d)*1 | 1.0 | 0.2 | – | 99.6 | – | – | – | 0.06 ⎭ |

16

Table 4(b)

|  | Average particle diameter (μm) | Ig.loss | $SiO_2$ | $Al_2O_3$ | MgO | $TiO_2$ | $Fe_2O_3$ | $CaO+Na_2O+K_2O$ |
|---|---|---|---|---|---|---|---|---|
| Aluminum hydroxide (a) | 3.6 | 34.5 | – | 65.0 | – | – | – | 0.2 |
| Aluminum hydroxide (b) | 2.0 | 34.3 | – | 64.9 | – | – | – | 0.3 |
| Aluminum hydroxide (c) | 1.7 | 34.1 | – | 64.9 | – | – | – | 0.3 |
| Aluminum hydroxide(d) | 1.2 | 34.0 | – | 65.1 | – | – | – | 0.3 |
| Silica (a) *2 | 8.0 | 0.1 | 99.6 | 0.1 | – | – | 0.1 | – |
| Silica (b) *2 | 5.0 | 0.1 | 99.7 | 0.1 | – | – | 0.1 | – |
| Silica (c) *3 | 5.6 | 0.2 | 99.4 | 0.1 | – | – | – | – |

*1):Alumina of low sodium content ($Na_2O$ content of not more than 0.12%)

*2):Amorphous fused silica

*3):Crystalline silica

* : Particle size distributions and average particle diameter are measured in the same way as in Example 1.

Ig.loss – as in Table 1.

Table 5(a)-1

| Test No. | Batch composition (wt%) | | | | | | Ratio of average particle diameter (kaoline/ talc) |
|---|---|---|---|---|---|---|---|
| | Talc (average particle diameter μm) | Kaoline (average particle diameter μm) | Calcined kaoline (average particle diameter μm) | Alumina (average particle diameter μm) | Aluminum hydroxide (average particle diameter μm) | Silica | |
| 101 | 40.5(7.5) | 25.0(1.0) | 20.8(2.0) | 13.7(2.0) | – | – | 1/5.2 |
| 102 | 40.5(5.0) | 25.0(1.0) | 20.8(2.0) | 13.7(2.0) | – | – | 1/3.4 |
| 103 | 40.5(5.0) | 25.0(1.0) | 20.8(1.0) | 13.7(2.0) | – | – | 1/5.0 |
| 104 | 40.5(3.0) | 25.0(0.2) | 20.8(1.0) | 13.7(2.0) | – | – | 1/5.3 |
| 105 | 40.5(3.0) | 25.0(0.2) | 20.8(0.8) | 13.7(2.0) | – | – | 1/6.3 |
| 106 | 40.5(5.0) | 25.0(1.0) | 20.8(2.0) | 13.7(4.0) | – | – | 1/3.4 |
| 107 | 40.5(3.0) | 25.0(1.0) | 20.8(2.0) | 13.7(2.0) | – | – | 1/2.1 |
| 108 | 40.5(5.0) | 25.0(1.0) | 20.8(2.0) | 13.7(1.7)* | – | – | 1/3.4 |
| 109 | 40.5(5.0) | 25.0(1.0) | 20.8(1.0) | 13.7(1.7)* | – | – | 1/5.0 |
| 110 | 40.5(3.0) | 25.0(0.2) | 20.8(0.8) | 13.7(1.7)* | – | – | 1/6.3 |
| 111 | 40.5(5.0) | 25.0(1.0) | 20.8(1.0) | 13.7(1.0)* | – | – | 1/5.0 |
| 112 | 40.5(3.0) | 25.0(0.2) | 20.8(1.0) | 13.7(1.0)* | – | – | 1/5.3 |
| 113 | 40.5(3.0) | 25.0(0.2) | 20.8(0.8) | 13.7(1.0)* | – | – | 1/6.3 |
| 114 | 41.0(3.0) | 27.5(0.2) | 17.5(0.8) | 14.0(1.7)* | – | – | 1/6.9 |
| 115 | 41.0(3.0) | 27.5(0.2) | 17.5(0.8) | 14.0(1.0)* | – | – | 1/6.9 |
| 116 | 39.1(5.0) | 29.1(1.0) | 16.0(2.0) | 9.0(2.0) | 6.8 (3.6) | – | 1/3.7 |
| 117 | 39.1(5.0) | 29.1(1.0) | 16.0(2.0) | 9.0(2.0) | 6.8 (2.0) | – | 1/3.7 |
| 118 | 39.1(3.0) | 29.1(0.4) | 16.0(0.8) | 9.0(1.0)* | 6.8 (1.7) | – | 1/5.5 |
| 119 | 38.0(5.0) | 25.6(1.0) | 18.4(1.0) | – | 18.0(3.6) | – | 1/5.0 |
| 120 | 38.0(3.0) | 25.6(0.4) | 18.4(1.0) | – | 18.0(2.0) | – | 1/4.6 |

18

## Table 5(a)-2

| Test No. | Firing conditions | | | Properties of sintered body | | | | | |
|---|---|---|---|---|---|---|---|---|---|
| | *1 Temperature raising rate (°C/Hr) | Maximum temperature (°C) | Holding time (Hr) | CTE ×10⁻⁶ (/°C) | *2 Porosity (%) | *3 Total volume of pores of a pore diameter of not less than 2 μm (cm³/g) | *4 Leakage amount (g/s·m²) | *5 Amount of cordierite crystal (wt%) | *6 Thermal shock resistance (°C) |
| 101 | 60 | 1410 | 6 | 0.7 | 26.4 | 0.103 | 100 | 93 | 800 |
| 102 | 60 | 1410 | 6 | 0.7 | 26.2 | 0.050 | 30 | 92 | 800 |
| 103 | 60 | 1410 | 6 | 0.6 | 25.9 | 0.030 | 20 | 92 | 850 |
| 104 | 60 | 1410 | 6 | 0.7 | 25.1 | 0.016 | 13 | 92 | 800 |
| 105 | 60 | 1410 | 6 | 0.8 | 20.9 | 0.012 | 8 | 92 | 750 |
| 106 | 60 | 1410 | 6 | 0.6 | 26.0 | 0.065 | 38 | 93 | 850 |
| 107 | 60 | 1410 | 6 | 1.1 | 26.2 | 0.043 | 27 | 92 | 700 |
| 108 | 60 | 1410 | 6 | 0.6 | 25.3 | 0.046 | 24 | 93 | 850 |
| 109 | 60 | 1410 | 6 | 0.6 | 25.4 | 0.028 | 18 | 93 | 850 |
| 110 | 60 | 1410 | 6 | 0.8 | 20.4 | 0.010 | 7 | 93 | 800 |
| 111 | 60 | 1410 | 6 | 0.6 | 23.5 | 0.027 | 15 | 93 | 800 |
| 112 | 60 | 1410 | 6 | 0.7 | 21.6 | 0.011 | 12 | 94 | 800 |
| 113 | 80 | 1410 | 6 | 0.6 | 18.6 | 0.008 | 5 | 93 | 850 |
| 114 | 50 | 1400 | 6 | 0.8 | 21.5 | 0.014 | 10 | 94 | 750 |
| 115 | 50 | 1400 | 6 | 0.8 | 19.9 | 0.010 | 6 | 94 | 750 |
| 116 | 50 | 1410 | 4 | 0.9 | 27.4 | 0.081 | 64 | 95 | 700 |
| 117 | 50 | 1410 | 4 | 0.8 | 24.1 | 0.065 | 27 | 96 | 750 |
| 118 | 50 | 1410 | 4 | 0.6 | 22.2 | 0.019 | 16 | 95 | 850 |
| 119 | 50 | 1410 | 4 | 0.9 | 27.9 | 0.070 | 60 | 95 | 700 |
| 120 | 50 | 1410 | 4 | 0.8 | 24.3 | 0.044 | 20 | 96 | 750 |

19

Table 5(b)-1

| Test No. | Batch composition (wt%) | | | | | | Ratio of average particle diameter (kaoline/ talc) |
|---|---|---|---|---|---|---|---|
| | Talc (average particle diameter μm) | Kaoline (average particle diameter μm) | Calcined kaoline (average particle diameter μm) | Alumina (average particle diameter μm) | Aluminum hydroxide (average particle diameter μm) | Silica | |
| 121 | 39.5(5.0) | 14.0(1.0) | 9.5(2.0) | 12.5(2.0) | 14.5(2.0) | 10.0(8.0) | 1/3.6 |
| 122 | 39.5(5.0) | 17.0(1.0) | 11.0(2.0) | 11.5(2.0) | 13.0(2.0) | 8.0(8.0) | 1/3.6 |
| 123 | 39.5(3.0) | 17.0(0.2) | 11.0(0.8) | 11.5(1.0)* | 13.0(1.2) | 8.0(8.0) | 1/6.9 |
| 124 | 39.5(7.0) | 21.0(1.0) | 13.0(2.0) | 11.5(2.0) | 10.0(2.0) | 5.0(8.0) | 1/5.1 |
| 125 | 39.5(5.0) | 21.0(1.0) | 13.0(2.0) | 11.5(2.0) | 10.0(2.0) | 5.0(8.0) | 1/3.6 |
| 126 | 39.5(5.0) | 21.0(1.0) | 13.0(2.0) | 11.5(2.0) | 10.0(3.6) | 5.0(8.0) | 1/3.6 |
| 127 | 39.5(5.0) | 21.0(1.0) | 13.0(2.0) | 11.5(2.0) | 10.0(2.0) | 5.0(5.0) | 1/3.6 |
| 128 | 39.5(5.0) | 21.0(1.0) | 13.0(2.0) | 11.5(2.0) | 10.0(2.0) | 5.0(5.6)** | 1/3.6 |
| 129 | 39.5(3.0) | 21.0(0.4) | 13.0(1.0) | 11.5(2.0) | 10.0(1.7) | 5.0(5.0) | 1/4.8 |
| 130 | 39.5(3.0) | 21.0(0.4) | 13.0(0.8) | 11.5(2.0) | 10.0(1.2) | 5.0(5.0) | 1/5.4 |
| 131 | 39.5(5.0) | 21.0(1.0) | 13.0(2.0) | 11.5(1.7)* | 10.0(2.0) | 5.0(5.0) | 1/3.6 |
| 132 | 39.5(3.0) | 21.0(0.4) | 13.0(1.0) | 11.5(1.7)* | 10.0(1.7) | 5.0(5.0) | 1/4.8 |
| 133 | 39.5(3.0) | 21.0(0.4) | 13.0(0.8) | 11.5(1.7)* | 10.0(1.2) | 5.0(5.0) | 1/5.4 |
| 134 | 39.5(5.0) | 21.0(2.0) | 13.0(0.8) | 11.5(1.7)* | 10.0(1.2) | 5.0(8.0) | 1/3.2 |
| 135 | 39.5(5.0) | 21.0(2.0) | 13.0(0.8) | 11.5(1.0)* | 10.0(1.2) | 5.0(8.0) | 1/3.2 |
| 136 | 39.5(3.0) | 21.0(0.4) | 13.0(1.0) | 11.5(1.0)* | 10.0(1.2) | 5.0(5.0) | 1/4.8 |
| 137 | 39.5(3.0) | 21.0(0.2) | 13.0(0.8) | 11.5(1.0)* | 10.8(1.2) | 9.0(5.0) | 1/7.0 |
| 138 | 40.0(3.0) | 22.0(0.2) | 16.2(0.8) | 11.0(1.0)* | 7.8(1.2) | 3.0(5.0) | 1/6.6 |
| 139 | 40.0(5.0) | 22.0(0.2) | 16.2(0.8) | 11.0(2.0) | 7.8(2.0) | 3.0(8.0) | 1/3.4 |
| 140 | 40.0(3.0) | 25.0(0.2) | 17.5(0.8) | 11.5(1.0)* | 5.0(1.2) | 1.0(5.0) | 1/6.7 |

EP 0 227 482 B1

## Table 5(b)-2

| Test No. | Firing conditions | | | Properties of sintered body | | | | | |
|---|---|---|---|---|---|---|---|---|---|
| | *1 Temperature raising rate (°C/Hr) | Maximum temperature (°C) | Holding time (Hr) | CTE ×10⁻⁶ (/°C) | *2 Porosity (%) | *3 Total volume of pores of a pore diameter of not less than 2 μm (cm³/g) | *4 Leakage amount (g/s·m²) | *5 Amount of cordierite crystal (wt%) | *6 Thermal shock resistance (°C) |
| 121 | 60 | 1410 | 10 | 0.3 | 33.9 | 0.110 | 120 | 90 | 950 |
| 122 | 60 | 1410 | 10 | 0.4 | 30.0 | 0.049 | 30 | 91 | 900 |
| 123 | 60 | 1410 | 10 | 0.4 | 26.7 | 0.025 | 18 | 92 | 850 |
| 124 | 60 | 1410 | 10 | 0.4 | 29.1 | 0.098 | 105 | 90 | 900 |
| 125 | 60 | 1410 | 10 | 0.4 | 28.7 | 0.048 | 26 | 91 | 900 |
| 126 | 60 | 1410 | 10 | 1.1 | 30.3 | 0.070 | 51 | 90 | 700 |
| 127 | 60 | 1410 | 10 | 0.4 | 27.4 | 0.035 | 22 | 91 | 900 |
| 128 | 60 | 1410 | 10 | 0.7 | 30.7 | 0.052 | 33 | 90 | 800 |
| 129 | 60 | 1410 | 10 | 0.5 | 25.7 | 0.024 | 17 | 91 | 900 |
| 130 | 60 | 1410 | 10 | 0.6 | 24.2 | 0.015 | 12 | 90 | 850 |
| 131 | 60 | 1410 | 10 | 0.4 | 27.3 | 0.033 | 21 | 91 | 900 |
| 132 | 60 | 1410 | 10 | 0.5 | 25.6 | 0.017 | 15 | 91 | 900 |
| 133 | 60 | 1410 | 10 | 0.5 | 23.9 | 0.013 | 10 | 91 | 850 |
| 134 | 60 | 1410 | 10 | 0.5 | 23.8 | 0.077 | 28 | 90 | 850 |
| 135 | 60 | 1410 | 10 | 0.5 | 23.7 | 0.052 | 22 | 91 | 850 |
| 136 | 60 | 1410 | 10 | 0.5 | 23.9 | 0.014 | 9 | 91 | 850 |
| 137 | 60 | 1410 | 10 | 0.4 | 22.3 | 0.008 | 7 | 91 | 850 |
| 138 | 60 | 1410 | 10 | 0.6 | 22.0 | 0.007 | 8 | 92 | 800 |
| 139 | 60 | 1410 | 10 | 0.6 | 24.2 | 0.069 | 26 | 92 | 800 |
| 140 | 60 | 1410 | 10 | 0.6 | 21.8 | 0.009 | 7 | 93 | 800 |

*1 Average temperature increase rate in a temperature range of 1,100-1,350°C.

*2 Mercury porosimeter. Calculated on total pore volume (assumed cordierite true density of 2.52)

*3 Mercury porosimeter

*4 Measured with the use of the honeycomb structural bodies having a test piece shape of 75 mm⌀ × 60 mmℓ and no outer wall under air pressure of 1.4 kg/cm². Measuring method was performed in accordance with "Ceramic Regenerator System Development Program-Final Report on page 213 in USA DOE/NASA/0008-12, NASACR-165139

*5 X-ray diffraction. Quantitative values on ZnO internal standard

*6 Durable temperature when held for 30 min in an electric furnace and exposing to room temperature.

* Alumina of low sodium

** Crystalline silica

As seen from Table 5, test Nos. 102-105, 108-115, 117, 118 and 120 wherein talc of an average particle diameter of not more than 5 μm and kaolin of an average particle diameter of not more than 2 μm and not exceeding one-third (1/3) of the average particle diameter of talc, are mixed with alumina and/or aluminum hydroxide of an average particle diameter of not more than 2 μm, and test Nos. 122, 123, 125, 127 and 129-140, wherein highly pure amorphous silica of an average particle diameter of not more than 8 μm is further added thereto, satisfy the total pore volume of a pore diameter of not less than 2 μm preferred according to

22

the invention.

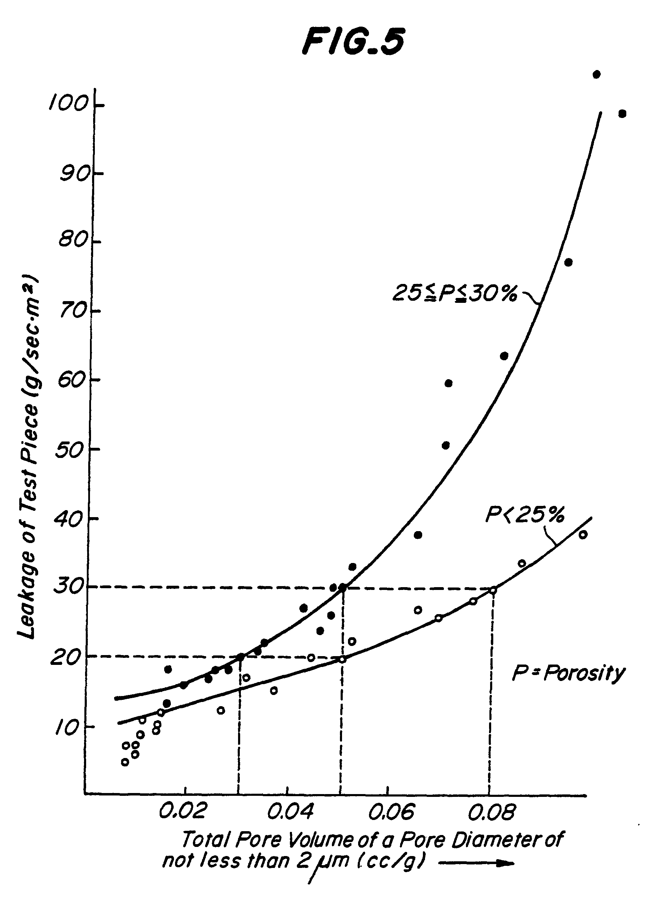

Further, relations between the leakage amount and the total pore volume of a pore diameter of not less than 2 $\mu$m in test pieces are determined at both porosities of less than 25% and not less under air pressure of l.4 kg/cm$^2$ respectively to obtain results shown in Fig. 5. In Fig. 5, white circles represent data on the porosity of less than 25% and black circles represent data on the porosity of not less than 25%. As seen from Fig. 5, in order to achieve the leakage amount of 30 g/sec.m$^2$ preferred in the invention, it is required that when the porosity is less than 25%, the total pore volume of a pore diameter of not less than 2 $\mu$m is not more than 0.08 cm$^3$/g and when it is not less than 25%, such a total volume is not more than 0.05 cm$^3$/g.

Examples of test Nos. l0l and l24 use talc of a particle diameter of not less than 5 $\mu$m, test No. l06 uses alumina of a particle diameter of not less than 2 $\mu$m, test Nos. ll6, ll9 and l26 use aluminum hydroxide of a particle diameter of not less than 2 $\mu$m, test No. l07 makes a ratio of average particle diameter of kaolin to that of talc not less than one-third (l/3), test No. l2l makes an amount added of silica not less than 8.0% and test No. l28 uses crystalline silica as a silica source material, so that the preferred total pore volume and/or the thermal expansion property are not satisfied.

Example 4

Batch of test No. l36 in Table 5 is formed into honeycomb structures by extrusion from dies of different cell structures in the same way as in Example 3, and the extruded articles are dried and fired to produce cylindrical honeycomb structural bodies Nos. l4l-l50 of a diameter of 93 mm and a height of l00 mm having cell structure as shown in Table 5. Respective honeycomb structural bodies are evaluated on pressure loss, leakage amount and coefficient of thermal expanion (CTE). the results of evaluation are shown in the following table 6 and the shape of the resulting honeycomb structural body is represented in Fig. 4.

Table 6

| No. | 141 | 142 | 143 | 144 | 145 | 146 | 147 | 148 | 149 | 150 |
|---|---|---|---|---|---|---|---|---|---|---|
| Cell shape | Square | | | | Triangle | | | Rectangle ($\frac{\text{Long side}}{\text{Short side}}$ =1.73/1) | | |
| Wall thickness (μm) | 203 | 152 | 102 | 102 | 140 | 90 | 90 | 120 | 102 | 90 |
| Cell density (cell/cm²) | 62 | 93 | 93 | 190 | 145 | 190 | 250 | 167 | 217 | 248 |
| Pressure loss * (mmH₂O/mm) | 0.40 | 0.55 | 0.48 | 0.81 | 0.97 | 0.98 | 1.18 | 0.92 | 1.21 | 1.43 |
| Leakage amount ** (g/s·m²) | 24 | 19 | 20 | 17 | 8 | 23 | 19 | 9 | 16 | 15 |
| CTE (×10⁻⁶/°C(40-800°C)) | 0.5 | 0.5 | 0.5 | 0.5 | 0.6 | 0.6 | 0.7 | 0.5 | 0.6 | 0.7 |

\* Pressure loss per unit length measured at flow rate of 0.5 g/sec·cm²

\*\* Measured with the use of honeycomb structural bodies having a test piece shape of 75 mmφ × 60 mmℓ and no outer wall under air pressure of 1.4 kg/cm²

As described in Tables 2 and 3, according to the invention, it is possible to obtain a honeycomb structural body of total pore volume of a pore diameter of not less than 5 μm of not more than 0.04 cm³/g and coefficient of thermal expantion (CTE) of not more than $1.0 \times 10^{-6}/°$ C, which has an improved thermal shock resistance, a small leakage amount and an improved heat exchanging efficiency.

According to the invention, it is also possible to obtain a honeycomb structure of total pore volume of a pore diameter of not less than 2 μm of not more than 0.05 cm³/g or, in the porosity of less than 25%, of not

24

more than 0.08 cm³/g and coefficient of thermal expansion of not more than $1.0 \times 10^{-6}/°C$ or $0.6 \times 10^{-6}/°C$, which has an improved thermal shock resistance, a very small leakage amount and an improved heat exchanging efficiency.

The cordierite honeycomb structural bodies according to the invention are very useful in a broader field.

## Claims

1. A cordierite honeycomb structural body comprising a crystalline phase consisting essentially of cordierite, total pore volume of a pore diameter of not less than 5 $\mu$m of not more than 0.04 cm³/g, coefficient of thermal expansion of not more than $1.0 \times 10^{-6}/°C$ in the temperature range of 40-800°C, and a chemical composition on a weight basis of 42-56% of $SiO_2$, 30-45% of $Al_2O_3$ and 12-16% of MgO as main components and less than 0.1% of $P_2O_5$.

2. A cordierite honeycomb structural body as defined in claim 1, wherein the total volume of a pore diameter of not less than 5 $\mu$m is not more than 0.026 cm³/g.

3. A cordierite honeycomb structural body as defined in claim 1 or claim 2 wherein the cell density per unit area is not less than 62 cells/cm² (400 cells/in²) and the partition wall thickness is not more than 203 $\mu$m (8 mil).

4. A cordierite honeycomb structural body, comprising a crystalline phase consisting essentially of cordierite, total pore volume of a pore diameter of not less than 2 $\mu$m of not more than 0.05 cm³/g or, in the case where the porosity is less than 25%, of not more than 0.08 cm³/g, coefficient of thermal expansion of not more than $1.0 \times 10^{-6}/°C$ in the temperature range of 40-800°C, and a chemical composition on a weight basis of 42-56% of $SiO_2$, 30-45% of $Al_2O_3$ and 12-16% of MgO as main components and less than 0.1% of $P_2O_5$.

5. A cordierite honeycomb structural body as defined in claim 4, wherein the total volume of a pore diameter of not less than 2 $\mu$m is not more than 0.03 cm³/g or, in the case where the porosity is less than 25%, of not more than 0.05cm³/g.

6. A cordierite honeycomb structural body as defined in claim 4 or claim 5, wherein the cell density 2 per unit area is not less than 62 cells/cm² (400 cells/in²) and the partition wall thickness is not more than 203 $\mu$m (8 mil).

7. A cordierite honeycomb structural body as defined in any one of claims 4 to 6 wherein the coefficient of thermal expansion is not more than $0.6 \times 10^{-6}/°C$ in the temperature range of 40-800°C.

8. A heat exchanger including at least one cordierite honeycomb structural body as defined in any one of claims 1 to 7 as heat exchanging element.

9. A method of producing a cordierite honeycomb structural body as defined in any one of claims 1 to 7, comprising preparing a mixture including very fine talc of an average particle diameter of not more than 7 $\mu$m and very fine kaolin of an average particle diameter of not more than 2 $\mu$m not exceeding one-third (1/3) of the average particle diameter of talc and other raw material(s) suitable to produce a cordierite of a chemical composition on a weight basis of 42-56% of $SiO_2$, 30-45% of $Al_2O_3$, 12-16% of Mgo and less than 0.1% of $P_2O_5$, adding a plasticizer and a binder to the mixture so as to obtain a plasticized deformable batch, extruding the plasticized batch to form a honeycomb structural body, drying the extruded honeycomb structural body, and firing the dried honeycomb structural body at a temperature of 1,350-1,440°C.

10. A method as defined in claim 9 wherein the dried honeycomb structural body is fired at an average temperature increase rate of 20-60°C/hr in the temperature range of 1,100-1,350°C immediately before the firing at the temperature of 1,350°C-1,440°C.

11. A method as defined in claim 9 or claim 10, wherein the very fine talc used has an average particle diameter of not more than 5 $\mu$m.

25

12. The method as defined in any one of claims 9 to 11 wherein the kaolin used has an average particle diameter of not more than 1 $\mu$m.

13. A method as defined in claim 9 wherein the very fine talc used has an average particle diameter of not more than 5 $\mu$m, and the mixture also includes very fine alumina and/or aluminum hydroxide of an average particle diameter of not more than 2 $\mu$m.

14. A method as defined in claim 13 wherein the very fine talc used has an average particle diameter of not more than 5 $\mu$m, and the mixture includes very fine alumina and/or aluminium hydroxide of an average particle diameter of not more than 2 $\mu$m and highly pure amorphous silica of an average particle diameter of not more than 8 $\mu$m.

15. The method as defined in claim 14 wherein the amount added of the highly pure amorphous silica is not more than 8%.

16. A method as defined in claim 13 or claim 14 wherein the content of $Na_2O$ in the alumina used in the raw materials for producing the cordierite is not more than 0.12%.

17. A method as defined in claim 13 or claim 14 wherein the kaolin used has an average particle diameter of not more than 1 $\mu$m.

**Revendications**

1. Corps en cordiérite ayant une structure en nid d'abeilles, comprenant une phase cristalline consistant essentiellement en cordiérite, un volume total des pores d'un diamètre des pores de pas moins de 5 $\mu$m de pas plus de 0,04 $cm^3$/g, un coefficient de dilatation thermique de pas plus de 1,0 x $10^{-6}$/°C dans la plage de température de 40-800°C, et une composition chimique sur une base pondérale de 42-56% de $SiO_2$, 30-45% de $Al_2O_3$ et 12-16% de MgO comme composants principaux et moins de 0,1% de $P_2O_5$.

2. Corps en cordiérite ayant une structure en nid d'abeilles selon la revendication 1, où le volume total du diamètre des pores de pas moins de 5 $\mu$m ne représente pas plus de 0,026 $cm^3$/g.

3. Corps en cordiérite ayant une structure en nid d'abeilles selon la revendication 1 ou la revendication 2, où la densité des cellules par aire unitaire n'est pas inférieure à 62 cellules/$cm^2$ (400 cellules/pouce carré) et l'épaisseur de la paroi de séparation ne dépasse pas 203 $\mu$m (8 millièmes de pouce).

4. Corps en cordiérite ayant une structure en nid d'abeilles comprenant une phase cristalline consistant essentiellement en cordiérite, un volume total des pores d'un diamètre des pores de pas moins de 2 $\mu$m de pas plus de 0,05 $cm^3$/g ou, dans le cas où la porosité est inférieure à 25 %, de pas plus de 0,08 $cm^3$/g, un coefficient de dilatation thermique de pas plus de 1,0 x $10^{-6}$/°C dans la plage de température de 40-800°C, et une composition chimique sur une base pondérale de 42-56% de $SiO_2$, 30-45% de $Al_2O_3$ et 12-16% de MgO, en tant que composants principaux et moins de 0,1% de $P_2O_5$.

5. Corps en cordiérite ayant une structure en nid d'abeilles selon la revendication 4, où le volume total d'un diamètre des pores de pas moins de 2 $\mu$m ne représente pas plus de 0,03 $cm^3$/g où, dans le cas où la porosité est inférieure à 25%, pas plus de 0,05 $cm^3$/g.

6. Corps en cordiérite ayant une structure en nid d'abeilles selon la revendication 4 ou la revendication 5, où la densité des cellules par aire unitaire ne représente pas moins de 62 cellules/$cm^2$ (400 cellules/pouce carré) et l'épaisseur de la paroi de séparation ne représente pas plus de 203 $\mu$m (8 millièmes de pouce).

7. Corps en cordiérite ayant une structure en nid d'abeilles selon l'une quelconque des revendications 4 à 6, où coefficient de dilatation thermique ne représente pas plus de 0,6 x $10^{-6}$/°C dans la plage de température de 40-800°C.

8. Echangeur de chaleur comprenant au moins un corps en cordiérite ayant une structure en nid d'abeilles selon l'une quelconque des revendications 1 à 7, en tant qu'élément d'échange de chaleur.

9. Méthode de production d'un corps en cordiérite ayant une structure en nid d'abeilles, selon l'une quelconque des revendications 1 à 7, consistant à préparer un mélange contenant du talc très fin d'un diamètre moyen de particules de pas plus de 7 $\mu$m et du kaolin très fin d'un diamètre moyen de particules de pas plus de 2 $\mu$m ne dépassant pas un tiers (1/3) du diamètre moyen de particules du talc et d'autre(s) matière(s) première(s) appropriée(s) à la production d'une cordiérite d'une composition chimique sur une base pondérale de 42-56% de $SiO_2$, 30-45% de $Al_2O_3$, 12-16% de MgO et moins de 0,1% de $P_2O_5$, à ajouter un agent plastifiant et un liant au mélange afin d'obtenir un lot déformable plastifié, à extruder le lot plastifié pour former un corps ayant une structure en nid d'abeilles, à sécher le corps extrudé ayant une structure en nid d'abeilles et à cuire le corps séché ayant une structure en nid d'abeilles à une température de 1350-1440 °C.

10. Méthode selon la revendication 9, où le corps séché ayant une structure en nid d'abeilles est cuit à une allure moyenne d'augmentation de température de 20-60 °C/h dans la plage de température de 1 100-1 350 °C, immédiatement avant cuisson à une température de 1 350 °C-1 440 °C.

11. Méthode selon la revendication 9 ou la revendication 10, où le talc très fin utilisé a un diamètre moyen de particules de pas plus de 5 $\mu$m.

12. Méthode selon l'une quelconque des revendications 9 à 11, où le kaolin utilisé a un diamètre moyen de particules de pas plus de 1 $\mu$m.

13. Méthode selon la revendication 9, où le talc très fin utilisé a un diamètre moyen de particules de pas plus de 5 $\mu$m, et le mélange contient également de l'alumine et/ou de l'hydroxyde d'aluminium très fin d'un diamètre moyen de particules de pas plus de 2 $\mu$m.

14. Méthode selon la revendication 13, où le talc très fin utilisé a un diamètre moyen de particules de pas plus de 5 $\mu$m, et le mélange contient de l'alumine et/ou de l'hydroxyde d'aluminium très fin d'un diamètre moyen de particules de pas plus de 2 $\mu$m et de la silice amorphe très pure d'un diamètre moyen de particules de pas plus de 8 $\mu$m.

15. Méthode selon la revendication 14, où la quantité ajoutée de la silice amorphe très pure ne dépasse pas 8%.

16. Méthode selon la revendication 13 ou la revendication 14, où la teneur en $Na_2O$ dans l'alumine utilisée dans les matières premières pour la production de la cordiérite ne dépasse pas 0,12%.

17. Méthode selon la revendication 13 ou la revendication 14, où le kaolin utilisé a un diamètre moyen de particules de pas plus de 1 $\mu$m.

## Patentansprüche

1. Kordierit-Körper mit Honigwabenstruktur, mit einer im wesentlichen aus Kordierit bestehenden kristallinen Phase, einem Gesamtporenvolumen mit einem Porendurchmesser von nicht weniger als 5 $\mu$m von nicht mehr als 0,04 cm$^3$/g, einem thermischen Ausdehnungskoeffizient von nicht mehr als 1,0 x 10$^{-6}$/°C im Temperaturbereich von 40-800 °C und einer chemischen Zusammensetzung auf das Gewicht bezogen von 42-56 % $SiO_2$, 30-45 % $Al_2O_3$ und 12-16 % MgO als Hauptbestandteile und weniger als 0,1 % $P_2O_5$.

2. Kordierit-Körper mit Honigwabenstruktur nach Anspruch 1, bei dem das Gesamtvolumen mit einem Porendurchmesser von nicht weniger als 5 $\mu$m nicht mehr als 0,026 cm$^3$/g beträgt.

3. Kordierit-Körper mit Honigwabenstruktur nach Anspruch 1 oder 2, bei dem die Zelldichte pro Einheitsfläche nicht weniger als 62 Zellen/cm$^2$ (400 Zellen/inch$^2$) ist und die Trennwanddicke nicht mehr als 203 $\mu$m (8 mil) ist.

4. Kordierit-Körper mit Honigwabenstruktur, mit einer im wesentlichen aus Kordierit bestehenden kristallinen Phase, einem Gesamtporenvolumen mit einem Porendurchmesser von nicht weniger als 2 $\mu$m von nicht mehr als 0,05 cm$^3$/g oder, falls die Porösität weniger als 25 % beträgt, von nicht mehr als 0,08 cm$^3$/g, einem thermischen Ausdehnungskoeffizient von nicht mehr als 1,0 x 10$^{-6}$/$^\circ$C im Temperaturbereich von 40-800 $^\circ$C und einer chemischen Zusammensetzung bezogen auf das Gewicht von 42-56 % SiO$_2$, 30-45 % Al$_2$O$_3$ und 12-16 % MgO als Hauptkomponenten und weniger als 0,1 % p$_2$O$_5$.

5. Kordierit-Körper mit Honigwabenstruktur nach Anspruch 4, bei dem das Gesamtvolumen mit einem Porendurchmesser von nicht weniger als 2 um nicht mehr als 0,03 cm$^3$/g oder, falls die Porösität weniger als 25 % beträgt, nicht mehr als 0,05 cm$^3$/g beträgt.

6. Kordierit-Körper mit Honigwabenstruktur nach Anspruch 4 oder 5, bei dem die Zelldichte pro Einheitsfläche nicht weniger als 62 Zellen/cm$^2$ (400 Zellen/inch$^2$) ist und die Trennwanddicke nicht mehr als 203 $\mu$m (8 mil) ist.

7. Kordierit-Körper mit Honigwabenstruktur nach einem der Ansprüche 4 bis 6, bei dem der thermische Ausdehnungskoeffizient nicht mehr als 0,6 x 10$^{-6}$/$^\circ$C im Temperaturbereich von 40 - 800 $^\circ$C beträgt.

8. Wärmetauscher enthaltend mindestens einen Kordierit-Körper mit Honigwabenstruktur nach einem der Ansprüche 1 bis 7 als wärmetauschendes Element.

9. Verfahren zum Herstellen einem Kordierit-Körpers mit Honigwabenstruktur gemäß einem der Ansprüche 1 bis 7, enthaltend das Bereiten einer Mischung, die sehr feinen Talg mit einem mittleren Teilchendurchmesser von nicht mehr als 7 $\mu$m und sehr feines Kaolin mit einem ein Drittel (1/3) des mittleren Teilchendurchmessers des Talgs nicht überschreitenden mittleren Teilchendurchmesser von nicht mehr als 2 $\mu$m ein und anderes zum Herstellen eines Kordierits mit einer chemischen Zusammensetzung bezogen auf das Gewicht von 42-56 % SiO$_2$, 30-45 % Al$_2$O$_3$, 12-16 % MgO und weniger als 0,1 % P$_2$O$_5$ geeignetes Rohmaterial enthält, Zugabe eines Knetmittels und eines Bindemittels zu der Mischung, um eine plastische verformbare Masse zu erhalten, extrudieren der plastischen Masse zum Formen eines Körpers mit Honigwabenstruktur, Trocknen des extrudierten Honigwabenstrukturkörpers und Brennen des getrockneten Honigwabenstrukturkörpers bei einer Temperatur von 1.350-1.440 $^\circ$C.

10. Verfahren nach Anspruch 9, bei dem der getrocknete Honigwabenstrukturkörper unmittelbar vor dem Brennen bei der Temperatur von 1.350-1.440 $^\circ$C bei einer mittleren Temperaturzuwachsrate von 20-60 $^\circ$C/Stunde im Temperaturbereich von 1.100-1.350 $^\circ$C gebrannt wird.

11. Verfahren nach Anspruch 9 oder 10, bei dem der verwendete sehr feine Talg einen mittleren Teilchendurchmesser von nicht mehr als 5 $\mu$m hat.

12. Verfahren nach einem der Ansprüche 9 bis 11, bei dem das verwendete Kaolin einen mittleren Teilchendurchmesser von nicht mehr als 1 $\mu$m hat.

13. Verfahren nach Anspruch 9, bei dem der verwendete sehr feine Talg einen mittleren Teilchendurchmesser von nicht mehr als 5 $\mu$m hat und die Mischung weiterhin sehr feine Tonerde und/oder Aluminiumhydroxid mit einem mittleren Teilchendurchmesser von nicht mehr als 2 $\mu$m enthält.

14. Verfahren nach Anspruch 13, bei dem der verwendete sehr feine Talg einen mittleren Teilchendurchmesser von nicht mehr als 5 $\mu$m hat und die Mischung sehr feine Tonerde und/oder Aluminiumhydroxid mit einen mittleren Teilchendurchmesser von nicht mehr als 2 $\mu$m und hochreine amorphe Kieselerde mit einem mittleren Teilchendurchmesser von nicht mehr als 8 $\mu$m enthält.

15. Verfahren nach Anspruch 14, bei dem die Menge der zugefügten hochreinen amorphen Kieselerde nicht mehr als 8 % beträgt.

16. Verfahren nach Anspruch 13 oder 14, bei dem der Gehalt an Na$_2$O in der in den Rohmaterialien zur Herstellung des Kordierit verwendeten Kieselerde nicht mehr als 0,12 % beträgt.

17. Verfahren nach Anspruch 13 oder 14, bei dem das verwendete Kaolin einen mittleren Teilchendurchmesser von nicht mehr als 1 $\mu$m hat.

# FIG. 1

# FIG.2

## FIG.3

Cumulative Weight (%)

Kaoline Particle Diameter (μm)

## FIG.4a

## FIG.4b

# FIG.5